# EUROPEAN PATENT SPECIFICATION

(11) **EP 0 865 644 B1**
(45) Date of publication and mention of the grant of the patent: **02.05.2002**
(21) Application number: 96934615.4
(22) Date of filing: 09.10.1996
(51) Int. Cl.: G07F 19/00, G07F 7/10, H04M 17/00

(54) **SYSTEM FOR FACILITATING THE ORDERING AND PAYING OF SERVICES BY MEANS OF A COMMUNICATION NETWORK**
SYSTEM ZUR VEREINFACHUNG DES BESTELLENS UND DES ABRECHNENS VON DIENSTEN MITTELS EINES KOMMUNIKATIONSNETZES
SYSTEME PERMETTANT DE FACILITER LES COMMANDES ET LES PAIEMENTS DE SERVICES PAR L'INTERMEDIAIRE D'UN RESEAU DE COMMUNICATION

(30) Priority: 10.10.1995 NL 1001387; 26.04.1996 WO PCT/EP96/01739
(43) Date of publication of application: 23.09.1998
(60) Divisional application: 01203924.4
(73) Proprietor: Koninklijke KPN N.V., 9726 AE Groningen (NL)
(72) Inventor: PIETERSE, Rob, NL-2111 ZL Aerdenhout (NL); PORS, Mark, Albert, NL-2719 KV Zoetermeer (NL); DE BEURS, Jaap, Rudolf, NL-7555 NC Hengelo (NL); VAN POMEREN, Frank, Pieter, NL-2624 NZ Delft (NL)
(86) International application number: EP9604402
(87) International publication number: WO9714124

(56) References cited:
- EP-A- 0 451 057
- EP-A- 0 494 530
- EP-A- 0 501 697
- EP-A- 0 590 861
- EP-A- 0 618 539
- WO-A-92/21110
- GB-A- 2 258 749
- US-A- 5 359 182

## Description

### BACKGROUND OF THE INVENTION

The invention relates to a system for remote electronic transactions, which system comprises a telecommunication network, such as a telephone network. The invention specifically relates to a system for providing electronic services, including financial transactions and identifications, and in which use is made of electronic payment means, such as so-called "smart cards" or "IC cards", and a communication network for transmitting payment data.

Remote ordering with the aid of, e.g., a telephone is known per se. It is possible, e.g., by telephone to order items from a mail-order firm. In this connection, however, the payment must take place later, upon delivery. This is experienced, both by the service provider (the mail-order firm) and the consumer (the ordering customer), as inconvenient, definitely in the event that the customer orders for someone else.

Systems for electronic payment are also known per se. It is known, e.g., to carry out, with the aid of a remote computer (PC), financial transactions ("telebanking"). In this connection, the computer of the customer is used as an aid for giving commands to the computer of the payment institution. The computer of the customer may also be used for identifying the user by means of, e.g., a PIN (Personal Identification Number).

Furthermore, it is known to use card-shaped electronic payment means to pay electronically. Thus, telephone booths nowadays are usually equipped for paying by means of an electronic payment card. It should be noted that in this text the term "smart card" or "IC card" will be used to indicate electronic payment means comprising an integrated circuit having at least a memory, but preferably also a processor. Such electronic payment means, which usually are constituted by a card in which the integrated circuit is embedded, enable in most cases the storage of a balance representing a value (so-called "prepaid cards"), and often also allow an identification of the user. It should, however, be understood that payment cards having a magnetic strip for storing a balance and/or identification data (so-called magnetic stripe cards) are for many applications equivalent to smart cards.

Existing systems for electronic payments make it possible to pay for certain services during use, e.g., in the event of the public telephone booth mentioned above, which may be activated by means of a card. It is often not possible, however, to securely pay for a number of different services in advance with the aid of an IC card and a telephone set. Moreover, in existing systems the option is lacking of revaluing the IC card in a remote manner, i.e., at the customer's premises. Furthermore, prior art systems do not allow an easy expansion of the systems as the demand for remote transactions increases.

European Patent Application EP-A-0494530 discloses a system for accessing amenities using credit cards via a public telephone network. In this known system, transactions are facilitated by means of a unit which is constituted by a store-and-forward switch and authentication is performed by means of credit cards. Apart from facilitating access to amenities and payment of services no provisions for direct payment using smart cards or for revaluing cards, nor use of smart cards or application of a voice response system is disclosed.

International patent application WO 94/11849, for example, discloses a system for effecting payments with the aid of mobile telephony (GSM). In the known system, the rights of the user are checked with the aid of the user card (SIM) and an identification code which is checked locally. The known system offers no provisions for applying payment cards such as so-called "prepaid cards".

International Patent Application WO 92/21110 discloses a system for the acquisition of services using a telephone set equipped with a smart card reader. The smart card is used to identify the user. This known system provides a coupling between the smart card of a user and the computer of a service provider, but does not comprise a specialized system for facilitating remote transactions. Also, this prior art system does not comprise means enabling a shortened transaction time.

European Patent Application EP 0 590 861 discloses a method for credit or debit card authorization. An authorization code is given to a vendor if a card holder is authorized to incur the expense of a purchase. The vendor then charges the credit card company for the purchase using the authorization code. This prior art method does not offer the possibility of direct payment. The use of smart cards is not disclosed.

European Patent Application EP 0 618 539 discloses a method for providing service using credit cards via a telephone network. There is no direct debiting or crediting of smart cards.

European Patent Application EP 0 658 862 discloses a method and system for mediating transactions using smart cards. A smart card gateway serves as a mediator between the user and a service provider to obtain credit information. A credit bureau host is used to validate credit information. Smart cards are used in this prior art system for identification purposes only. There is no disclosure of direct payment by means of smart cards.

European Patent Application EP 0,588,339 and corresponding US Patent 5,396,558 disclose a method and apparatus for the settlement of accounts by means of IC cards. The method uses secret and public keys and digital signatures to protect the card data and to enable a direct exchange of data between card terminals. There is no disclosure of a system in which payment data are stored at a trusted third party.

### SUMMARY OF THE INVENTION

It is an object of the invention to eliminate the above-mentioned and other drawbacks of the prior art, and to provide a system which makes it possible to remotely pay for a plurality of different services with the aid of an electronic payment means, such as a smart card. It is also an object of the invention to provide a system which makes it possible, in a simple but reliable manner to remotely process electronic payments. It is a further object of the invention to provide a system which makes use of existing telecommunication means such as, e.g., the public telephone network. It is an additional object of the invention to provide a system which offers the option of revaluing remote smart cards. It is a yet further object of the invention to provide a system which offers the option of remote revaluation of a smart card and/or remote identification. It is a still further object of the present invention to provide a system for remote transactions which is scalable and readily expandable.

To this end, the present invention provides a system for electronic remote services, such as financial services, comprising a communication network, a facilitating unit coupled with both the network and one or more support units, a terminal coupled to the communication network, a service unit coupled to the communication network, the terminal being provided with means for exchanging information with a payment means.

The said facilitating unit for enabling services by providing communication routes between a user terminal, a service unit and support units, is according to the invention characterised in that the faciliting unit preferably comprises a voice response system and a communication server mutually connected by a control link and a data link, the voice response unit being arranged for handling a service request and passing the request to the communication server via the control link, the communication server being arranged for setting up, in response to the service request, a communication route from the voice response system via the data link and the communication server to a support unit.

With the aid of such a system, it is possible for a user, by way of his terminal and the communication network, to establish a direct communication route with the facilitating unit, after which the facilitating unit contacts the service unit of a service provider and the transaction unit of the system respectively. In this manner, a service may be ordered and, by way of the transaction unit in combination with the smart card, be paid directly and in a remote manner. Moreover, it is possible with such a system to remotely revalue smart cards in the event that the system is also provided with a revaluation unit coupled to the facilitating unit. Furthermore, it is possible to identify a card user if the system is also provided with an identification unit coupled to the facilitating unit.

### BRIEF DESCRIPTION OF THE DRAWINGS

The invention will be further explained below with reference to the drawings, in which:
- Fig. 1: diagrammatically shows an embodiment of a system according to the invention for electronically carrying out financial transactions and ordering services,
- Fig. 2: diagrammatically shows the facilitating unit and associated parts of the system of Fig. 1,
- Fig. 3: diagrammatically shows the processes of the facilitating unit of Fig. 2,
- Fig. 4: diagrammatically shows an example of a resource table as used in the facilitating unit of Figs. 2 and 3,
- Fig. 5: diagrammatically shows the exchange of messages between the constituent parts of a remote payment system in accordance with the invention.

### EXEMPLARY EMBODIMENTS

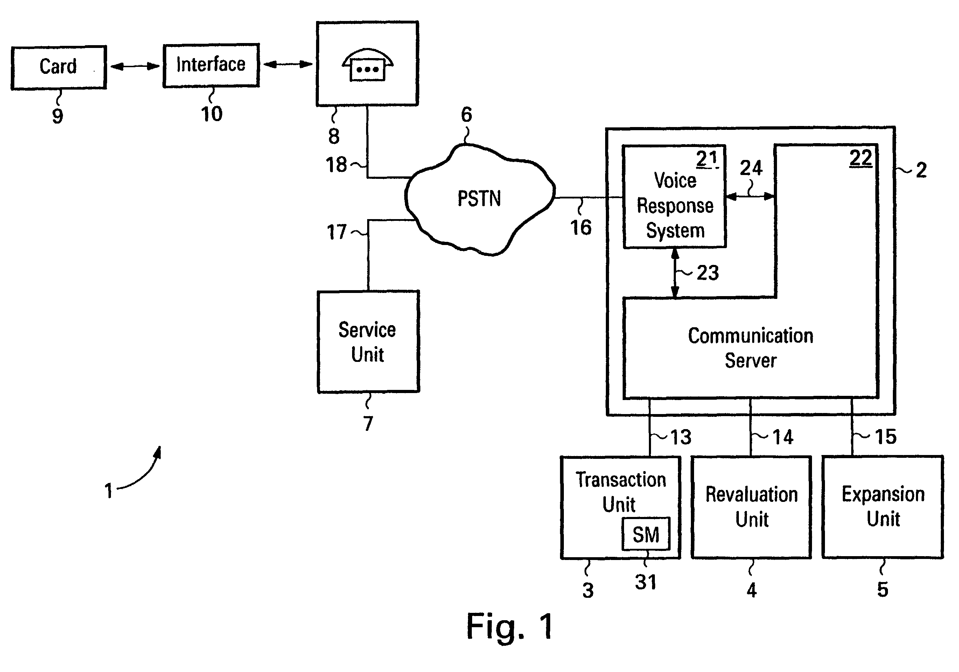

The system 1 shown in Fig. 1 by way of example comprises a facilitating unit 2 coupled with three support units, i.e. a transaction unit 3, a revaluation unit 4 and an expansion unit 5, by means of communication links 13, 14 and 15 respectively. The facilitating unit 2 is connected with a communication network 6 via a communication link 16. A service unit 7 and a terminal 8 are connected with the communication network 6 by means of communication links 17 and 18 respectively. It will be understood that in practice a plurality of terminals 8 and service units 7 may be coupled to the communication network 6 by means of a plurality of parallel communication links 17 and 18 respectively.

The communication network 6, which provides the communication between a consumer (via a terminal 8), a service provider (via a service unit 7) and the transaction, revaluation and expansion units 3, 4 and 5 respectively (via the facilitating unit 2), is preferably constituted by a fixed telephone network (PSTN). It will be understood, however, that the communication network 6 may just as well comprise a mobile communication network, such as e.g. a GSM or DECT network, or another fixed communication network, such as an ISDN network. In the example shown, the communication links 16 through 18, and also communication link 24, are telephone lines.

The terminal 8 of a consumer (user) may be constituted by an ordinary telephone set, but possibly also by a mobile telephone, an ISDN set or, possibly, a fax machine. The terminal 8 is provided with (internal or external) interface means 10 for exchanging data with an electronic payment means 9, such as a smart card, provided with an integrated circuit for storing and processing payment and/or identification data. A terminal 8 may be used which is especially equipped for carrying out electronic payment transactions and which, to this end, comprises a smart card reader/writer. An ordinary telephone set, however, may be advantageously applied in combination with a device as described in International Patent Application PCT/EP96/01739. Such a device (acting as interface means 10) provides a transparant interface between a smart card and a telephone set, converting electrical smart card signals into acoustical ones and vice versa without altering the transferred data proper. The transparant interface provides a transparant path between the smart card and (the security module of) a transaction unit, as will later be explained in more detail. A suitable interface 10 may also be connected in the communication link 18 and thus be electrically connected with the terminal 8.

The service unit 7 preferably comprises a speech generating response unit ("voice response system"), which may be controlled by DTMF tones generated by either the user's terminal or by the response unit itself. The service provider's response unit may be constituted by a suitably programmed computer. The service unit 7, however, may also consist of a further terminal, such as a telephone set, and a data processing device, such as a personal computer which is controlled by a human operator. The service unit 7 may be equipped for rendering services at a charge, such as, e.g., delivering foods or booking transportation, but also financial services such as remitting money. Although the service unit 7 is shown to be connected with the facilitating unit 2 through the network 6, alternative embodiments may be envisaged in which a service unit 7 is coupled directly with the voice response system 21 of the facilitating unit 2.

In the example shown, the facilitating unit 2 facilitates services by providing a (preferably transparent) intermediary between: (a) the terminal 8 and the smart card 9 of a consumer, (b) the service unit 7 of a service provider, and (c) the transaction unit 3 which enables the payment of services offered. Additionally, the facilitating unit 2 can act as a (preferably transparant) intermediary between e.g. a smart card 9 of a consumer and a revaluation unit 4 in order to provide financial services.

The facilitating unit 2 consists of at least one voice response system 21 and at least one communication server 22. These two constituent components of the facilitating unit 2 are mutually connected by means of a control link 23 and a data link 24. As will be explained later in more detail, the control link 23 and the data link 24 may comprise a communication network (e.g. PSTN, ISDN or X.25). The transaction unit 3, the revaluation unit 4 and the expansion unit 5 are connected with the communication server 22 of the facilitating unit 2 through communication links 13, 14 and 15 respectively. The communication links 13, 14 and 15 may be transmission lines, but may also comprise suitable networks.

The system of Fig. 1 may be applied as follows (it will be assumed that the terminal 8 is an ordinary telephone set and that the consumer in question disposes of an interface or transfer device 10 according to International Patent Application PCT/EP96/01739 for coupling the smart card 9 and the telephone set 8). The consumer uses the terminal (telephone set) 8 to set up a connection with the voice response system 21 of the facilitating unit 2 in a conventional manner. The consumer chooses a certain service, either by using a (telephone) number related to that service, or (in the event of a common number for several services) by entering supplementary numbers on the terminal 8, possibly in reply to questions posed by the voice response system 21. Subsequently the voice response system 21, by way of the network 6, makes a connection with the service unit 7 of the service provider in question.

In this connection, the voice response system 21 may output some (cryptographically protected) identification information in order to mutually identify the voice response system 21 and the service units 7.

The consumer orders his service (or product), whereupon the service unit 7 of the service provider produces a series of DTMF tones which is representative of the service and the costs thereof. Alternatively, the service unit 7 uses another protocol to exchange control information. The voice response system 21 then places the service provider in the waiting mode and gives the consumer instructions with respect to the payment. Substantially at the same time, the voice response system 21 establishes through the communication server 22 a connection with the transaction unit 3. In order to control the switching process in the communication server 22, the voice response system 21 subsequently sends commands to the server 22 via link 23.

The consumer starts the payment process by pressing a certain key (e.g., "^{∗}") on his telephone set (terminal) 8 or on his transfer (interface) device 10. Which key must be pressed may have been communicated to the consumer by the voice response system 21. Another key (e.g., "#") may serve to discontinue the transaction. In the event that the payment process does take place, the subscriber line of the consumer is connected through to the transaction unit 3. The consumer places his payment means 9 (smart card) in the device 10 in question and holds this device 10 against (the handset of) the telephone set 8. Subsequently, he presses a key of the device 10, whereupon the card 9 and (a security module 31 of) the transaction unit 3 proceed to exchange payment information. Such a device 10 is preferably provided with a display screen on which the status of the payment transaction is shown.

After the payment has been effected, the consumer receives an (e.g., acoustic) signal indicating that the transaction is completed and that a new transaction, if any, may be started. To this end, the service provider receives a feedback from the voice response system. The voice response system 21 may invite the consumer, to choose other services with the aid of DTMF tones.

The system 1 of the present invention thus provides a transparant end-to-end path between the smart card (9 in Fig. 1) and a security module ("SM", 31 in Fig. 1) for exchanging payment information. Alternatively, the system 1 provides a (preferably transparant) path between the smart card 9 and the revaluation unit 4 (for increasing the balance of the card 9) or the expansion unit 5 (for providing additional services, such as user identification). The system 1 also provides a (voice) connection between the user's terminal 8 and the service provider's service unit 7.

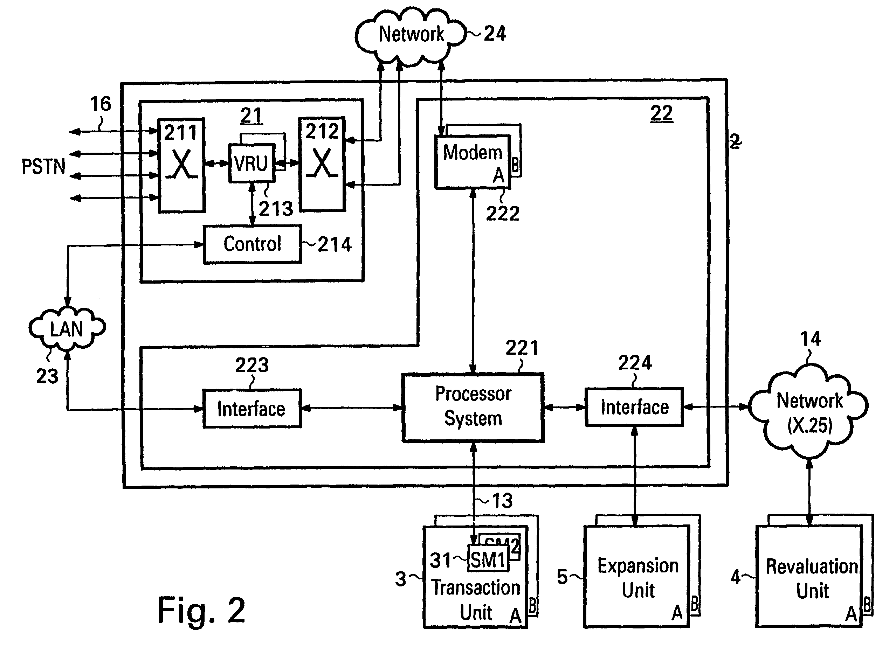

The structure of the facilitating unit 2 will now be explained in more detail with reference to Fig. 2.

In the embodiment shown in Fig. 2, the voice response system 21 comprises two switches 211 and 212, at least one voice response unit 213 (denoted as "VRU") in Fig. 2) and a control unit 214. The first switch 211 is coupled with a network, e.g. the network 6 of Fig. 1, via a communication link 16. As shown in Fig. 2, the link 16 may consist of a plurality of sub-links, e.g. individual telephone lines. The first switch 211 connects an incoming call with an available voice response unit 213. Preferably, the voice response system 21 comprises a plurality of voice response units 213, e.g. ten or twenty. The second switch 212 is also coupled with the voice response units 213 in order to connect such a unit with the communication server 22 through the data link 24. Data link 24, which is used to exchange data messages (data signals), is shown in Fig. 2 as comprising a separate network rather than consisting of a mere transmission line. However, a direct connection between the switch 212 and the first interface 222 of the communication server 22 is also possible. It should be noted that the network constituting the data link 24 may be a PSTN network, and that this network may be identical to the network 6 of Fig. 1.

The voice response system 21 of Fig. 2 further comprises a control unit 214, which may comprise a microprocessor system, such as a personal computer. The control unit 214 is connected with the voice response units 213 and with control link 23. The control link 23 is shown in Fig. 2 as comprising a separate network, such as a local area network (LAN), for passing control messages (control signals) to and from the communication server 22. This enables the voice response system 21 and the communication server 22 to be at different locations, and to interconnect a plurality of voice response systems 21 and a plurality of communication servers 22. However, a direct connection between the control system 214 and the second interface 223 of the communication server 22 is also possible.

It should be noted that alternative embodiments are possible in which the voice response system 21 is much simpler and merely gives an attention signal, after which the system switches to transparant mode and provides a connection with the server 22.

The communication server 22 comprises a processor system 221, a first interface 222 (preferably comprising at least one modem), a second interface 223 and a third interface 224. The processor system 221 may consist of a commercially available microcomputer system having a microprocessor and a memory, using e.g. the UNIX operating system. The processor system 221 interfaces with the control link 23 via the second interface 223. Similary, the processor system 221 interfaces with the data link 24 via the modems of the first interface 222. As stated before, the data link 24 preferably comprises a telephone network (PSTN), in which case modems are used to convert the data into the appropriate formats. However, in case the data link 24 is constituted by a data network, the modems 222 may be replaced by another suitable interface or may possibly be omitted.

In Fig. 2, the communication link 14 comprises a data network, such as a network based on the ITU X.25 recommendation. The third interface 224 provides an appropriate coupling between the processor system 221 and the data network 14. It will be understood that the revaluation unit 4 may comprise an internal interface (not shown).

A transaction unit 3, connected with the processor system 221 via communication link 13, comprises at least one security module 31 (denoted as "SM") for securely storing transaction data. Such security modules are preferably mounted detachably in the transaction unit 3 and are protected against unauthorised access. An example of the use of a security module and of the associated exchange of messages is described in European Patent Application EP 0 637 004.

For the purpose of the authentication of users (consumers) on the basis of payment means 9, the transaction unit 3 is provided with authentication means. To this end, the transaction unit 3 may comprise a data file containing key data, including e.g. master keys and/or diversified keys, and possibly also encryption programs. Although a transaction unit may comprise a separate processor and memory for e.g. performing cryptographic operations and for securely storing data in memory means (e.g. hard discs) associated with the processor, such a unit may in its simplest form be constituted by a card reader/writer in which a security module card is inserted. Such a card is similar to a regular smart card, the integrated circuit being designed for securely storing transaction data.

In Fig. 2, two transactions units 3 labelled A and B are shown by way of example. Similarly, two revaluation units 4 labelled A and B are shown. It will be understood that the number of transaction units 3 and revaluation units 4 which can be connected with the facilitating unit 2 is only limited by the processing power of the processor system 221. If necessary, additional communication servers 22 can be added.

The facilitating unit 2 is thus easily scalable (increasing the number of communication links 16) and expandable (increasing the number of communication servers 22).

The revaluation units 4 are shown in Figs. 1 and 2 as separate units, but may be integrated in the transaction units 3. A revaluation unit 4 comprises means for increasing the balance of a smart card. Such means for increasing a balance may comprise a processor system (e.g. a PC) running suitable software. During the revaluation, the revaluation unit 4 exchanges data by way of the facilitating unit 2, the communication network 6, the terminal 8 and the interface device 10, with the payment means 9, preferably by means of a security protocol.

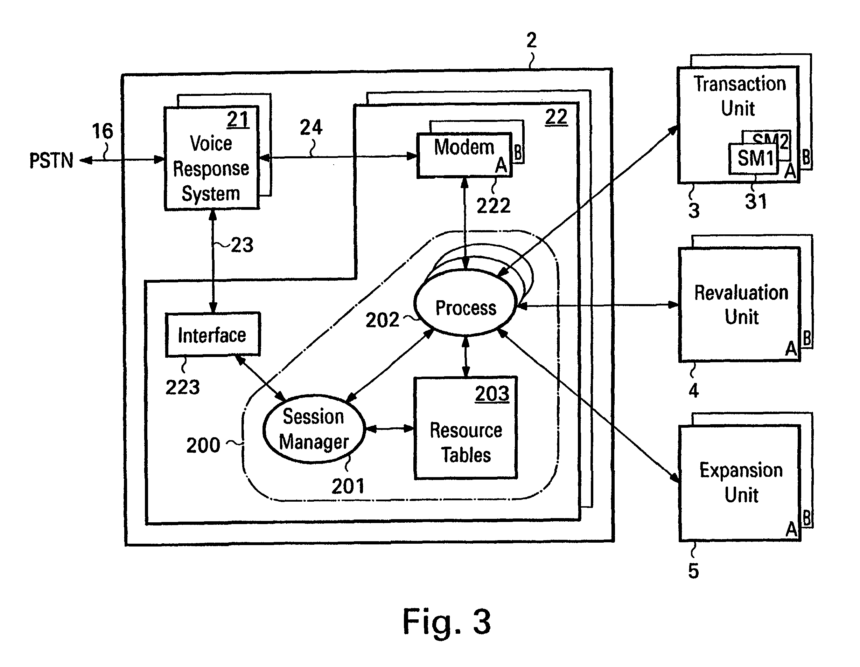

The operation of the facilitating unit 2 will further be explained with reference to Fig. 3.

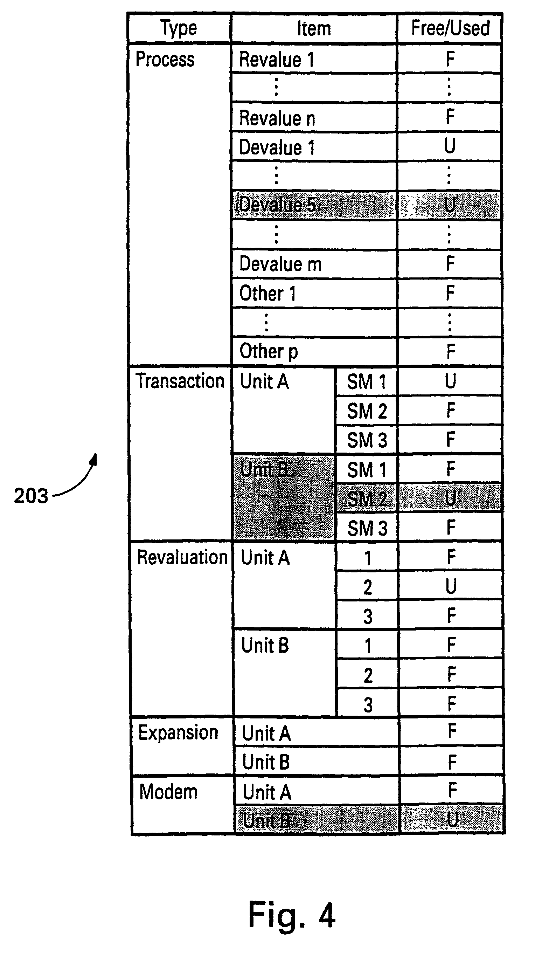

Fig. 3 schematically shows the functionalities of the communication server 22. The main process 200 running in the processor system 221 of Fig. 2 comprises three parts: a session manager 201, processes 202 and resource tables 203. The session manager 201 exchanges control information with the voice response system 21 via the second interface 223. In response to an appropriate request, the session manager 201 checks the resource tables 203 in order to determine whether a new process can be initiated. If this is possible, a new process 202 is created. This is indicated in the resource tables 203, as will later be explained with reference to Fig. 4.

Each process 202 exchanges data with the voice response system 21 via a modem 222. A modem 222 may be assigned to a certain process by means of the resource tables 203. Depending on the particular transaction requested by the consumer, a process 202 interacts with e.g. the revaluation unit 4 or the transaction unit 3.

As will be understood from the above, the facilitating unit 2 operates in two phases: a control phase and a data phase. In the control phase, a connection is set up, while in the data phase, a (transparant) message exchange takes place.

Fig. 4 shows an exemplary embodiment of a resource table 203. The table comprises several columns, a first column being labelled "Type". In this column, the type of a resource is indicated, e.g. processes, transaction units, revaluation units, expansion units, modems, etc. The number of types may be increased as needs arise. Each type comprises a group of items, each item having a reference number.

The second column of table 203 is labelled "Item" and provides a list of the resources of each type. In the case of transaction units, a further subdivision is made as each transaction unit may comprise more than one security module (SM).

The last column of the table 203 indicates whether the resource is available ("F" = "free") or not ("U" = "used"). The resource table, and in particular its last column, is regularly updated by the session manager, e.g. each time a new process 202 is started and terminated. The session manager 201 scans the resource table before starting a new process 202 in order to determine whether the resources necessary can be allocated to the new process.

In the example shown, the shaded areas indicate that devaluation process #5, transaction unit B, security module #2 (of transaction unit B) and modem B are claimed for a devaluation process (some other resources may be claimed for other processes). The devaluation process claiming said resources is a process 202 as depicted in Fig. 3. The process is initiated by the session manager 201 in response to a service request from the voice response system 21. When the devaluation process 202 in question is terminated, the resources claimed are returned to the pool of available resources. This will be indicated in table 203 by setting the corresponding entries in the last column to "F" (free).

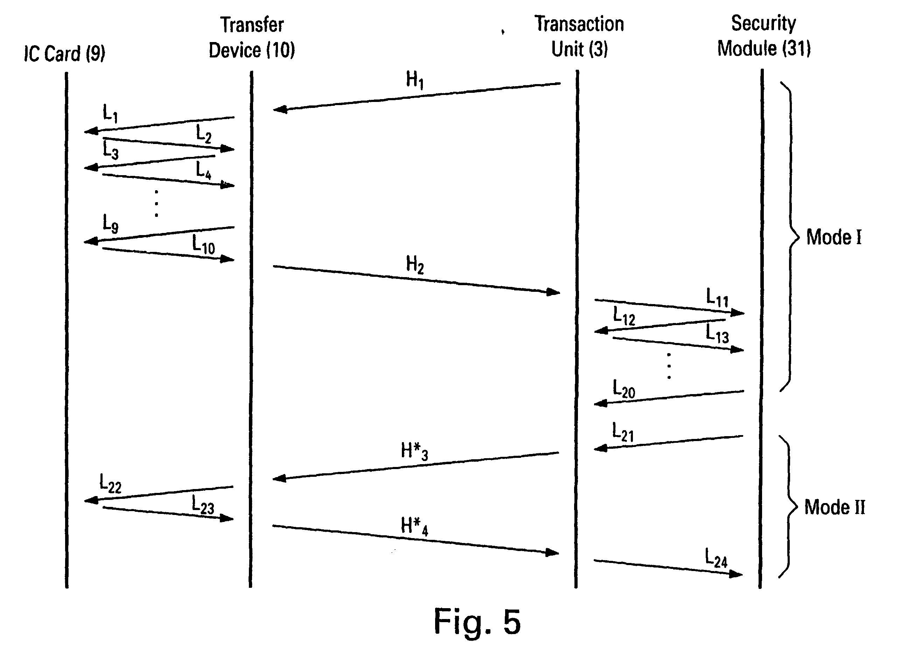

In Fig. 5, the exchange of card data (commands and data sent to the IC card and their responses) between an IC card on the one hand and a security module of a transaction unit on the other hand is schematically represented. The IC card may correspond with the card 9 of Fig. 1, the transfer device may correspond with the interface device 10 of Fig. 1, the transaction unit may be the unit 3 of Fig. 1, and the security module may correspond with the Security Module (SM) 31 in Fig. 1.

In accordance with a further aspect of the present invention, a distinction is made between two levels of card commands exchange. Between the IC card and the transfer device, a low level exchange takes place: the actual card commands and card data are sent to and received from the card. As this exchange is performed using electrical signals within the transfer device 10, the exchange can have a high data rate. Between the transfer device and the transaction unit, however, an acoustic path is present (between the device 10 and the handset of the terminal 8). This section of the connection between IC card and security module usually has a limited transmission speed. For this reason, in this section a high level exchange takes place in which several low level commands are grouped together and are replaced with a single high level command. In this way, the transmission time required for a transaction can be significantly reduced. However, the content of the information transferred is not changed. This will further be explained with reference to Fig. 5.

As is shown in Fig. 5, the transaction unit 3 may issue a high level command (indicated by H). In response to the receipt of this single high level command, the transfer device exchanges several low level commands (indicated by L) with the IC card 9. The result of this exchange is sent by the transfer device to the transaction unit as a single high level command (H). Subsequently, this high level command results in the exchange of several low level commands (L) between the transaction unit and the security module. Each high level command (H) thus represents a routine comprising a plurality (e.g. five of ten) low level commands (L). Preferably, the high level commands are optimized for efficiency by e.g. having each commonly used routine represented by a single high level command.

Preferably, the transfer device supports two different modes of data exchange. In a first mode (indicated by Mode I in Fig. 5) the transfer device operates as described above: a high level command represents several low level commands. In a second mode (indicated by Mode II in Fig. 5) a single low level command (L) is sent as a high level command (H*) to the transfer device, which passes the command as a low level command to the IC card. The resulting low level command (L) produced by the card is again sent by the transfer device to the transaction unit as a high level command (H*), which subsequently converts the command back into a low level command (L). It will be understood that the high level commands H* merely convey low level commands (L). That is, the high level commands H* may e.g. consist of a low level command plus an appropriate header. In this way, low level commands may be transparantly passed to the IC card while using the structure and/or data protocol of the high level commands. This transparant passing has the advantage that low level commands may be used for which no high level command is available, i.e. which cannot be grouped in an existing high level command. This is especially advantageous as the introduction of an IC card with one or more new commands does not necessitate an upgrade of the software of the transfer device.

Preferably, the transfer device, as well as the transaction unit, is capable of shifting back and forth between Mode I and Mode II, so that high level commands (H) representing a number of low level commands may be interspersed with high level commands (H*) merely conveying a single low level command.

All high level messages are passed directly to an application, e.g. the revalue and devalue processes shown in Fig. 3. The system of the present invention thus provides a high degree of transparancy with respect to the messages exchanged between the smart card 9 and the applications.

The message exchange of Fig. 5 will now be explained in greater detail, using a devaluation of the smart card (i.e. a payment) as an example.

The transaction unit 3, which handles card devaluations, issues a high level command H₁ = DEVALU(2.00, R), where 2.00 is the amount which is to be deducted from the card and R is a random number which serves to securely identify the transaction and thus to prevent fraudulent replay. This high level command H₁, which itself may have a length of only several bytes, causes the transfer device 10 to exchange a series of low level messages L₁ - L₁₀ with the card 9. Such messages are e.g.:
L₁: select purse ( <- )
L₂: done (-> )
L₃: select application ( <- )
L₄: done ( -> )
L₅: present value (2.00) ( <- )
L₆: done ( -> )
L₇: present random (R) ( <- )
L₈: done ( -> )
L₉: calculate response ( <- )
L₁₀: response = W ( -> )
The arrows indicate the direction of a message: from the transfer device to the card ( <- ) and from the card to the transfer device ( -> ). W is the value of the calculated response. As can be seen, the actual data (2.00 and R) of the high level command H₁ are not altered by the low level commands L₅ and L₇.

After receiving the response W in low level message L₁₀, the transfer device sends a high level message H₂ = RESPON(W) to the transaction unit. The actual value of W is not altered by the transfer device.

After receiving the high level response message H₂, the transaction unit starts an exchange of low level messages L₁₀ - L₂₀ with the security module:
L₁₁: select SM revalue ( -> )
L₁₂: OK ( <- )
L₁₃: present value (2.00) ( -> )
L₁₄: OK ( <- )
L₁₅: present random (R) ( -> )
L₁₆: OK ( <- )
L₁₇: present response (W) ( -> )
L₁₈: OK ( <- )
L₁₉: calculate X ( -> )
L₂₀: OK ( <- )
The arrows indicate the direction of a message: from the transaction unit to the security module ( -> ) and from the security module to the transaction unit ( <- ).

As stated above, the actual content of the messages (the value, the random R and the response W) is transparantly transferred, while the length of the messages exchanged between the transaction unit and the transfer device is significantly reduced.

The use of mixed low level and high level commands will now be explained, still referring to Fig. 5. For the sake of the example, it will be assumed that the syntax of the instruction "calculate response" is changed in a new release of the smart card. In the example given above, the low level message L₉ will consequently produce an error message L₁₀: "unknown instruction". This message L₁₀ will then be transparantly passed to the transaction unit, which may in return produce an appropriate instruction and send this command to the transfer device as high level command H*₃. The transfer device subsequently transfers the command H*₃ as low level command L₂₂ to the card, which then produces the proper response W. The response W is then sent to the security module as commands L₂₃, H*₄ and L₂₄.

In this way, only a single low level command is necessary to remedy the use of an incorrect (e.g. outdated) command. Still, a significant saving in the amount of commands transferred over the network (6 in Fig. 1) is maintained, and thus a significant saving in transmission time is achieved.

Although the system 1 of Figs. 1-3 is preferably applied in combination with smart cards having a prepaid balance (so-called "prepaid cards"), which balance is reduced during a payment, the system may also be applied with payment means which serve exclusively for identification, and in which payments are debited to an account. Such payment means may also be constituted by so-called magnetic stripe cards. Furthermore, the system of the invention is not substantially changed if magnetic stripe cards are used instead of smart cards, e.g. as prepaid cards storing balances.

It will thus be understood by those skilled in the art that the invention is not limited to the embodiments shown, and that many modifications and additions are possible without departing from the scope of the invention.

## Claims

1. Facilitating unit (2) for enabling services by providing communication routes between a user terminal (8), a service unit (7) and support units (3, 4, 5), **characterized in that** the facilitating unit (2) comprises a voice response system (21) and a communication server (22) mutually connected by a control link (23) and a data link (24), the voice response unit (21) being arranged for handling a service request and passing the request to the communication server (22) via the control link (23), the communication server (22) being arranged for setting up, in response to the service request, a communication route from the voice response system (21) via the data link and the communication server (22) to a support unit (e.g. 3).

2. Facilitating unit (2) according to claim 1, comprising a plurality of voice response systems (21).

3. Facilitating unit (2) according to claim 1 or 2, comprising a plurality of communication servers (22).

4. Facilitating unit according to any of the preceding claims, wherein a voice response system (21) comprises one or more voice response units (213), a first switch (211) for routing an incoming call to a voice response unit (213), a second switch (212) for routing an incoming call to the communication server (22), and a control unit (214) for controlling the voice response units (213) and for passing control signals to the communication server (22).

5. Facilitating unit (2) according to any of the preceding claims, wherein the communication server (22) comprises a processor system (221), a first interface (222) for exchanging data signals and a second interface (223) for exchanging control signals with the voice response system (21).

6. Facilitating unit (2) according to claim 5, wherein the first interface (222) comprises at least one modem.

7. Facilitating unit (2) according to claim 5 or 6, wherein the communication server (22) further comprises a third interface (224) for exchanging data signals with a support unit (4) via a data network (14).

8. Facilitating unit (2) according to claim 5, 6 or 7, wherein the processor system (221) of the communication server (22) is arranged for providing a session manager (201) which starts new processes (202) providing communication routes in response to information stored in resource tables (203).

9. Facilitating unit (2) according to claim 8, wherein a resource table (203) comprises a list of available processes (202), support units (3, 4, 5) and interfaces (e.g. 222).

10. Facilitating unit (2) according to claim 9, wherein an expandable resource table (203) allows resources to be added without changing the session manager (201).

11. System (1) for electronic financial services, comprising a communication network (6), a facilitating unit (2) according to any of the preceding claims and coupled with the network (6) and one or more support units (3, 4, 5), a terminal (8) coupled to the communication network, a service unit (7) coupled to the communication network, the terminal (8) being provided with means (10) for exchanging information with a payment means (9).

12. System according to claim 11, wherein a support unit is a transaction unit (3) comprising at least one security module (31) for storing transaction data.

13. System according to claim 11 or 12, wherein a support unit is a revaluation unit (4) for revaluing smart cards (9).

14. System according to claim 13, further provided with a data network (14) for exchanging transaction data between the facilitating unit (2) and the revaluation unit (4).

15. System according to any of the claims 11 through 14, in which the interface device (10) is arranged for communicating with a support unit (3, 4, 5) on a first level and with the IC card (9) on a second level, each level involving a different data rate.

16. System according to claim 15, in which a command of the first level (H*) comprises a single command of the second level (L).

17. System according to claim 14 or 15, in which a command of the first level (H) represents one or more commands of the second level (L).

18. System according to any of the claims 11 through 17, wherein the communication network (6) comprises a fixed telephone network.

19. System according to any of the claims 11 through 17, wherein the communication network (6) comprises a mobile telephone network.

20. Financial transaction, carried out with the ai.d of a system (1) according to any of the claims 11 through 19.

## Patentansprüche

1. Zugangseinheit (2) zur Durchführung von Dienstleistungen über das Liefern von Kommunikationswegen zwischen einem Endgerät (8), einer Diensteinheit (7) und Unterstützungseinheiten (3, 4, 5), **dadurch gekennzeichnet, dass** die Zugangseinheit (2) vorzugsweise ein Sprachantwortsystem (21) und einen Kommunikationsserver (22) umfasst, die beide über eine Steuerverbindung (23) und eine Datenverbindung (24) miteinander verbunden sind, wobei das Sprachantwortsystem (21) so angeordnet ist, um eine Dienstanfrage zu behandeln und die Dienstanfrage an den Kommunikationsserver (22) über die Steuerleitung (23) weiterzuleiten, wobei der Kommunikationsserver (22) so angeordnet ist, um in Antwort auf die Dienstanfrage einen Kommunikationsweg von dem Sprachantwortsystem (21) über die Datenverbindung und den Kommunikationsserver (22) an eine Unterstützungseinheit (z.B. 3) weiterzuleiten.

2. Zugangseinheit (2) nach Anspruch 1, **dadurch gekennzeichnet, dass** sie eine Vielzahl von Sprachantwortsystemen (21) umfasst.

3. Zugangseinheit (2) nach Anspruch 1 oder Anspruch 2, **dadurch gekennzeichnet, dass** sie eine Vielzahl von Kommunikationsservern (2) umfasst.

4. Zugangseinheit (2) nach einem der vorstehenden Ansprüche, **dadurch gekennzeichnet, dass** ein Sprachantwortsystem (21) eine oder mehrere Sprachantworteinheiten (213) umfasst, einen ersten Schalter (211) zum Weiterleiten eines eingehenden Anrufs an eine Sprachantworteinheit (213), einen zweiten Schalter (212) zum Weiterleiten eines eingehenden Anrufs an den Kommunikationsserver (22), und eine Steuereinheit (214) zum Steuern der Sprachantworteinheiten (213) und zum Weiterleiten der Steuersignale an den Kommunikationsserver (22).

5. Zugangseinheit (2) nach einem der vorstehenden Ansprüche, **dadurch gekennzeichnet, dass** der Kommunikationsserver (22) ein Prozessorsystem (221), eine erste Schnittstelle (222) zum Austausch von Datensignalen und eine zweite Schnittstelle (223) zum Austausch von Steuersignalen mit dem Sprachantwortsystem (21) umfasst.

6. Zugangseinheit (2) nach Anspruch 5, **dadurch gekennzeichnet, dass** die erste Schnittstelle (222) mindestens ein Modem umfasst.

7. Zugangseinheit (2) nach Anspruch 5 oder Anspruch 6, **dadurch gekennzeichnet, dass** der Kommunikationsserver (22) weiterhin eine dritte Schnittstelle (224) zum Austausch von Datensignalen mit einer Unterstützungseinheit (4) über ein Datennetzwerk (14) umfasst.

8. Zugangseinheit (2) nach Anspruch 5, 6 oder 7, **dadurch gekennzeichnet, dass** das Prozessorsystem (221) des Kommunikationsservers (22) so angeordnet ist, um einen Ablaufmanager (201) zu liefern, der neue Prozesse (202) startet, die Kommunikationswege in Antwort auf Information liefern, die in Ressourcentabellen (203) gespeichert sind.

9. Zugangseinheit (2) nach Anspruch 8, **dadurch gekennzeichnet, dass** eine Ressourcentabelle (203) eine Liste von verfügbaren Prozessen (20), Unterstützungseinheiten (3, 4, 5) und Schnittstellen (z.B. 222) umfasst.

10. Zugangseinheit (2) nach Anspruch 9, **dadurch gekennzeichnet, dass** eine ausbaubare Ressourcentabelle (203) gestattet, dass Ressourcen hinzugefügt werden können, ohne dass der Ablaufmanager (201) geändert werden muss.

11. System (1) für elektronische Finanzdienstleistungen, umfassend ein Kommunikationsnetzwerk (6), eine Zugangseinheit (2) nach einem der vorstehenden Ansprüche und die mit dem Netzwerk (6) und auch einer oder mehrerer Unterstützungseinheiten (3, 4, 5) gekoppelt ist, ein Endgerät (8), welches mit dem Kommunikationsnetzwerk verbunden ist, eine Diensteinheit (7), welche mit dem Kommunikationsnetzwerk verbunden ist, und wobei das Endgerät (8) mit Mitteln (10) zum Austausch von Informationen mit einem Zahlungsmittel (9) versehen ist.

12. System nach Anspruch 11, bei dem eine Unterstützungseinheit eine Transaktionseinheit (3) ist, die mindestens ein Sicherheitsmodul (31) zum Speichern von Transaktionsdaten umfasst.

13. System nach Anspruch 11 oder Anspruch 12, bei dem eine Unterstützungseinheit eine Wiederaufladeeinheit (4) zum Wiederaufladen von Chipkarten (9) ist.

14. System nach Anspruch 13, bei dem weiterhin ein Datennetzwerk (14) zum Austausch von Transaktionsdaten zwischen der Zugangseinheit (2) und der Wiederaufladeeinheit (4) vorgesehen ist.

15. System nach einem der Ansprüche 11 bis 14, bei dem die Schnittstellenvorrichtung (10) so angeordnet ist, um mit einer Unterstützungseinheit (3, 4, 5) auf einem ersten Niveau und mit der IC-Karte (9) auf einem zweiten Niveau zu kommunizieren, wobei jedes Niveau eine unterschiedliche Datenrate umfasst.

16. System nach Anspruch 15, bei dem ein Befehl des ersten Niveaus (H*) einen einzigen Befehl des zweiten Niveaus (L) umfasst.

17. System nach Anspruch 14 oder nach Anspruch 15, bei dem ein Befehl des ersten Niveaus (H*) einen oder mehrere Befehle des zweiten Niveaus (L) umfasst.

18. System nach einem der Ansprüche 11 bis 17, bei dem das Kommunikationsnetzwerk (6) ein festes Telefonnetzwerk umfasst.

19. System nach einem der Ansprüche 11 bis 17, bei dem das Kommunikationsnetzwerk (6) ein mobiles Telefonnetzwerk umfasst.

20. Finanzielle Transaktion, durchgeführt mit der Hilfe eines Systems (1) nach einem der Ansprüche 11 bis 19.

## Revendications

1. Unité de facilitation (2) destinée à permettre des services en fournissant des itinéraires de communications entre un terminal d'utilisateur (8), une unité de service (7) et des unités de soutien (3, 4, 5), **caractérisée en ce que** l'unité de facilitation (2) comprend un système de réponse vocale (21) et un serveur de communications (22) reliés mutuellement par une liaison de commande (23) et une liaison de données (24), l'unité de réponse vocale (21) étant agencée afin de prendre en compte une demande de service et transmettre la demande au serveur de communications (22) par l'intermédiaire de la liaison de commande (23), le serveur de communications (22) étant agencé afin d'établir, en réponse à la demande de service, un itinéraire de communications depuis le système de réponse vocale (21) par l'intermédiaire de la liaison de données et du serveur de communications (22) à une unité de soutien (par exemple 3).

2. Unité de facilitation (2) selon la revendication 1, comprenant une pluralité de systèmes de réponse vocale (21).

3. Unité de facilitation (2) selon la revendication 1 ou 2, comprenant une pluralité de serveurs de communications (22).

4. Unité de facilitation selon l'une quelconque des revendications précédentes, dans laquelle un système de réponse vocale (21) comprend une ou plusieurs unités de réponse vocale (213), un premier commutateur (211) destiné à acheminer un appel entrant vers une unité de réponse vocale (213), un second commutateur (212) destiné à acheminer un appel entrant vers le serveur de communications (22), et une unité de commande (214) destinée à commander les unités de réponse vocale (213) et à transmettre des signaux de commande au serveur de communications (22).

5. Unité de facilitation (2) selon l'une quelconque des revendications précédentes, dans laquelle le serveur de communications (22) comprend un système de processeur (221), une première interface (222) destinée à échanger des signaux de données et une seconde interface (223) destinée à échanger des signaux de commande avec le système de réponse vocale (21).

6. Unité de facilitation (2) selon la revendication 5, dans laquelle la première interface (222) comprend au moins un modulateur-démodulateur (modem).

7. Unité de facilitation (2) selon la revendication 5 ou 6, dans laquelle le serveur de communications (22) comprend en outre une troisième interface (224) destinée à échanger des signaux de données avec une unité de support (4) par l'intermédiaire d'un réseau de données (14).

8. Unité de facilitation (2) selon la revendication 5, 6 ou 7, dans laquelle le système de processeur (221) du serveur de communications (22) est agencé afin de fournir un gestionnaire de session (201) qui lance de nouveaux traitements (202) fournissant des itinéraires de communications en réponse à des informations mémorisées dans des tables de ressources (203).

9. Unité de facilitation (2) selon la revendication 8, dans laquelle une table de ressources (203) comprend une liste des traitements disponibles (202), des unités de soutien (3, 4, 5) et des interfaces (par exemple 222).

10. Unité de facilitation (2) selon la revendication 9, dans laquelle une table de ressources pouvant être étendue (203) permet que des ressources soient ajoutées sans modifier le gestionnaire de session (201).

11. Système (1) destiné à des services financiers électroniques, comprenant un réseau de communications (6), une unité de facilitation (2) selon l'une quelconque des revendications précédentes est reliée au réseau (6) et une ou plusieurs unités de soutien (3, 4, 5), un terminal (8) relié au réseau de communications, une unité de service (7) reliée au réseau de communications, le terminal (8) étant pourvu d'un moyen (10) destiné à échanger des informations avec un moyen de paiement (9).

12. Système selon la revendication 11, dans lequel une unité de soutien est une unité de transaction (3) comprenant au moins un module de sécurité (31) destiné à mémoriser des données de transaction.

13. Système selon la revendication 11 ou 12, dans lequel une unité de soutien est une unité de réévaluation (4) destinée à réévaluer des cartes à mémoire (9).

14. Système selon la revendication 13, pourvu en outre d'un réseau de données (14) destiné à échanger des données de transaction entre l'unité de facilitation (2) et l'unité de réévaluation (4).

15. Système selon l'une quelconque des revendications 11 à 14, dans lequel le dispositif d'interface (10) est agencé dans le but de communiquer avec une unité de soutien (3, 4, 5) sur un premier niveau et avec la carte à circuit intégré (9) sur un second niveau, chaque niveau impliquant un débit de données différent.

16. Système selon la revendication 15, dans lequel un ordre du premier niveau (H*) comprend un seul ordre du second niveau (L).

17. Système selon la revendication 14 ou 15, dans lequel un ordre du premier niveau (H) représente un ou plusieurs ordres du second niveau (L).

18. Système selon l'une quelconque des revendications 11 à 17, dans lequel le réseau de communications (6) comprend un réseau téléphonique fixe.

19. Système selon l'une quelconque des revendications 11 à 17, dans lequel le réseau de communications (6) comprend un réseau téléphonique mobile.

20. Transaction financière, exécutée à l'aide d'un système (1) selon l'une quelconque des revendications 11 à 19.
